# EUROPEAN PATENT SPECIFICATION

(11) **EP 3 753 405 B1**
(45) Date of publication and mention of the grant of the patent: **07.06.2023**
(21) Application number: 19180649.6
(22) Date of filing: 17.06.2019
(51) Int. Cl.: A01M 7/00

(54) **AN ASSEMBLY FOR AN EXTENDABLE AND RETRACTABLE BOOM OF AN AGRICULTURAL MACHINE AND AGRICULTURAL SPRAYER**
ANORDNUNG FÜR EINEN AUS- UND EINZIEHBAREN AUSLEGER EINER LANDWIRTSCHAFTLICHEN MASCHINE UND LANDWIRTSCHAFTLICHE SPRITZE
ENSEMBLE POUR FLÈCHE EXTENSIBLE ET RÉTRACTABLE D'UNE MACHINE AGRICOLE ET PULVÉRISATEUR AGRICOLE

(43) Date of publication of application: 23.12.2020
(73) Proprietor: Kverneland Group Nieuw-Vennep B.V., 2153 LR Nieuw-Vennep (NL)
(72) Inventor: Vedder, Gert-Jan, 2153 LR Nieuw-Vennep (NL)
(74) Representative: Bittner, Thomas L.

(56) References cited:
- WO-A1-2015/082121
- US-A- 4 709 857
- US-B1- 6 719 213

## Description

The present disclosure refers to an assembly for an extendable and retractable boom of an agricultural machine and an agricultural sprayer.

### Background

Booms or boom systems are used in different types of agricultural machines. For example, extendable and retractable booms are applied for configuring the agricultural machine for different working situations. By extending and retracting the boom, for example, different working widths can be provided for the agricultural machine. Such booms or boom systems are applied for example in agricultural sprayers provided for distributing liquid material such as herbicide, pesticide, or fertilizer.

For extending and retracting the boom, boom sections are relocated by relative movement, specifically by relative rotational movement or pivoting. For example, a 180 degrees rotational movement may be applied to adjacent boom sections for extending and retracing the boom. The two boom sections to be moved by rotational movement are connected by an articulation or articulating joint allowing rotational movement between the boom sections. An actuator mechanism is applied for driving relative movement between the boom sections. The actuator mechanism works together with hinged elements for accomplishing the 180 degrees rotational movement between the neighbouring boom sections for extending and retracing the boom.

Document WO 2015 / 082121 A1 discloses an agricultural sprayer comprising an applicator boom having a centre boom frame and a pair of multi-section boom side assemblies. Each side assembly is mounted by a respective hinge to the centre boom frame. Neighbouring boom sections are mutually connected by a hinged joint which permits folding around an upright axis from a deployed operating configuration to a transport configuration. A spring and damper mechanism is associated with the hinged joint for controlling pivoting movement around the upright axis between said two boom sections.

Document US 6 719 213 B1 pertains to an agricultural boom made up of two sections connected together, including an inner boom section and an outer boom section that are joined together with a hinge assembly in mid portions of the boom. The outer boom section is mounted to the inner boom with a linkage and control cylinder that provides for a knee action that permits the outer boom section to be raised and lowered. The boom sections are both mounted about upright axes and are supported against downward loads by separate pairs of cables that have ends joined at the base of the respective boom section at spaced points and connected to the outer or free ends of the respective boom sections at common points. The cables permit the boom sections to pivot about their respective upright axes with one of the cables carrying tension loads and causing the outer or free ends of the boom sections to rise while the other cable becomes slack.

Document US 4 709 857 A discloses a lightweight, variable height, agricultural field sprayer frame having two laterally extending boom sections which fold to a narrow width. For transportation, the booms can be vertically raised or lowered to adjust their spraying height so that they can be used for pre-emergent or crop height spraying. The folding and unfolding of the booms between transport and spraying positions is power controlled from a driver's seat or cab, as is the raising and lowering of the booms.

### Summary

It is an object to provide an assembly for an extendable and retractable boom for an agricultural machine and an agricultural sprayer having improved functionality for accomplishing movement between adjacent boom sections for extending and retracing the boom.

For solving the problem, an assembly for an extendable and retractable boom of an agricultural machine and an agricultural sprayer according to claims 1 and 11, respectively, are provided. Additional embodiments are disclosed in dependent claims.

According to an aspect, an assembly for an extendable and retractable boom of an agricultural machine is provided. The assembly comprises: a first boom section having a first frame structure comprising a plurality of frame elements; a second boom section connected to the first boom section by an articulating joint configured to allow 180 degrees rotational movement between the first and second boom sections, thereby, relocating the first and second boom sections between an extended boom section arrangement and a retracted boom section arrangement; an arrangement of hinged elements connected to both the first and the second boom sections; and an actuator mechanism, the actuator mechanism comprising an actuator received inside the first frame structure of the first boom section and functionally connected to the arrangement of hinged elements, wherein the actuator mechanism and the arrangement of hinged elements are configured to produce the 180 degrees rotational movement between the first and second boom sections, and the actuator is configured to drive the 180 degrees rotational movement. The arrangement of hinged elements comprises: a plurality of link arms provided in a link arm arrangement, wherein a distal end of the link arm arrangement being distal to the actuator is connected to the second boom section and a proximal end of the link arm arrangement being proximal to the actuator is connected to the actuator; a first lever element, wherein the first lever element is pivotally connected on opposite sides to the actuator and a first mounting point, respectively, the first mounting point being located inside the first frame structure of the first boom section; and a second lever element, wherein the second lever element is pivotally connected on opposite sides to an articulating joint of the link arm arrangement and a second mounting point, respectively, the second mounting point located inside the first frame structure of the first boom section.

According to another aspect, an agricultural sprayer is provided, comprising an extendable and retractable boom having the assembly.

The actuator mechanism having an actuator provides for a simple driving mechanism for boom section rotation. On the other hand, the actuator located inside or within the first frame structure of the first boom section and combined with the hinged elements connecting to both the first and the second boom sections supports maximum rotational movement between the first and second boom sections for allowing convenient extension and retraction of the boom. Also, a compact design is provided. The actuator and the folding hinge parts are protected from damage when boom is hitting an obstruction.

The second boom section may be provided with a second frame structure comprising a plurality frame elements. Frame elements within at least one of the first and the second frame structures may be fixedly or detachably connected.

In the extended boom section arrangement, the first and second boom sections may be provided in linear boom section arrangement. In the retracted boom section arrangement, the first and second boom sections may be provided in an essentially parallel configuration.

The articulating joint may be provided in a corner section of each of the first and second boom sections, for example, adjacent corner boom sections of the first and second boom sections.

The actuator may be provided essentially in a middle or centre section of the first frame structure of the first boom section. The single actuator may be received in a mounting space provided inside the first frame structure of the first boom section.

The connection of the first lever element to the actuator may be a direct connection or an indirect connection, for example, the first lever element connecting to one of the link arm elements which in turn connects to the actuator. In such embodiment, the first lever element may connect to the actuator, for example to a movable part of the link arm element, in a location adjacent to the actuator.

The connection of the second lever element to the articulating joint may be a direct connection or an indirect connection, for example, the second lever element connecting to at least one of the link arm elements which in turn connects to the articulating joint. In such embodiment, the second lever element may connect to the link arm element in a location adjacent to the articulating joint.

The actuator mechanism may be made of a single actuator.

The link arm arrangement may be a serial link arm arrangement. For the serial link arm arrangement, the plurality of link arms is provided in a serial arrangement. For example, the serial link arm arrangement may be made of two link arms serially connected.

The actuator may be movable between an extracted (extended) position and a retracted position for driving the 180 degrees rotational movement or pivoting between the first and second boom sections. By the combination of the actuator and the hinged elements movement between the extracted and retracted positions of the actuator is transferred or translated into relocation of the first and second boom sections between the extended and the retracted positions.

The actuator (in part or completely) may be received inside the first frame structure of the first boom section for both the extended position and the retracted position.

The actuator may be provided with a cylinder-piston arrangement. The hinged elements may connect to a rod or bar element moving between an extended (extracted) and a retracted position in response to moving the piston within the cylinder in operation. The first lever element may be connected to the moving rod or bar element. The cylinder-piston arrangement may be of the hydraulic or pneumatic type of arrangement. Alternatively, the actuator may be an electric or a magnetic actuator configured to provide driving force for the 180 degrees rotational movement between the first and second boom sections. The cylinder-piston arrangement may be in a retracted position if the boom is extended.

The actuator may be located within a mounting space or volume provided inside the first frame structure of the first boom section.

A hinged element or all hinged elements of the arrangement of hinged elements may be may connect to a mounting, a supporting or an attachment point on one or both opposite sides. The mounting, supporting or attachment point may be provided on a frame element of the first frame structure or the second frame structure.

At least one of the proximal end of the link arm arrangement and the first lever element may connect pivotally to a movable actuator element of the actuator, the movable actuator element being moving between a first and a second position in operation for producing the 180 degrees rotational movement between the first and second boom sections.

The actuator may be connected to the first boom section in a rotation point allowing the actuator to be rotated around the rotation point while the actuator is driving the 180 degrees rotational movement between the first and second boom sections.

The rotation point may be located in a location selected from the following group: underneath the actuator (in a top view), within outer edges of the actuator (in a top or bottom view), and adjacent to the outer edges of the actuator (in a top or bottom view). The actuator may be pivotally mounted on only one side or on opposite sides of the actuator or may be mounted rotatable around a cylindrical surface or pin / shaft.

Embodiments of the arrangement may include bearings or ball heads at the positions of rotation axes of the arms / hinges, for less friction and longer life time. These bearings or ball heads may be equipped with maintenance points (grease nipples) for applying grease. Grease nipples can also be mounted to the rotation pins with grease coming in through the inside.

Each of the first and the second boom sections may be a sprayer boom section for an agricultural sprayer. Agricultural sprayers are used for distributing liquid material on the field, such as pesticide, herbicide, or fertilizer.

The examples disclosed above with regard to the assembly for the extendable and retractable boom may apply to the agricultural sprayer *mutatis mutandis.*

### Description of further embodiments

Following, further embodiments are described with referring to figures. In the figures show:
- Fig. 1: a schematic representation of a boom of an agricultural sprayer;
- Fig. 2: a schematic representation of an arrangement having a first boom section and a second boom section provided in an extended boom section arrangement or orientation;
- Fig. 3: a schematic representation of an arrangement having first and second boom sections provided in an extended position;
- Fig. 4: a schematic representation of the arrangement from Fig. 3 in an intermediate position;
- Fig. 5: another schematic representation of the arrangement from Fig. 3 in the intermediate position; and
- Fig. 6: a schematic representation of the arrangement from Fig. 3 in a retracted position.

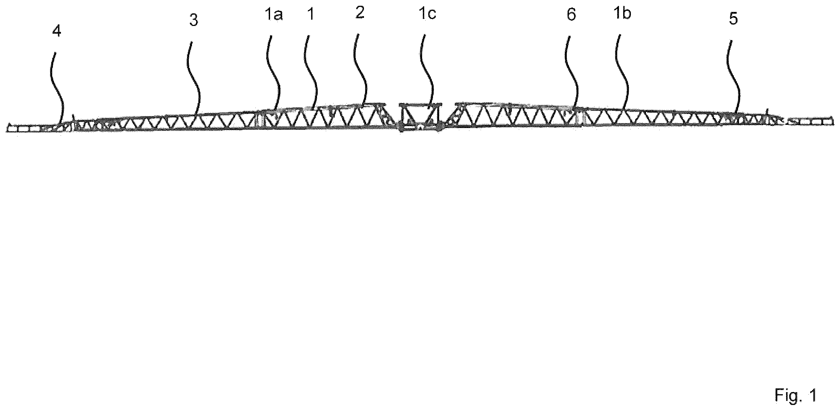

Fig. 1 shows a schematic representation of a boom 1 for an agricultural sprayer in an extended orientation which may also be referred to extended arrangement or extended position. The boom 1 may be applied to an agricultural sprayer which in turn may be provided or received on an implement to be carried or trailed by a tractor or a self-driving agricultural machine. The agricultural machine is provided with a tank or reservoir containing a product to be dispensed by spraying to the field. The tank will be in fluid communication with sprayer elements (not shown) provided on the boom 1 such as a nozzle system for dispensing the liquid material.

Fig. 1 show a rear view of the boom 1. The boom 1 comprises a plurality of boom sections 2, 3, 4 on one boom side 1a. According to the embodiment shown, there is a plurality of further boom sections on the other boom side 1b. The boom section 2 is connected to a middle (boom) section 1c. The boom 1 is shown in a working position or configuration.

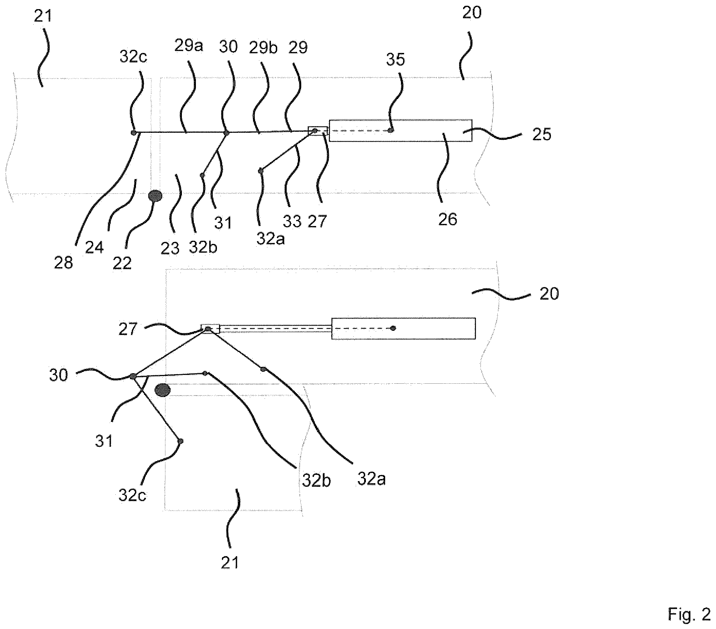

Referring to Fig. 2, an embodiment for an arrangement having a first and a second boom section 20, 21 is described. Such boom sections may provide for two of the boom section 1c, 2, 3, and 4 in Fig. 1. For the boom shown in Fig. 1, such arrangement may be provided, with respect to the middle boom section 1c, in a distant location 5 and / or a proximal location 6. Thus, the middle boom section 1c may be connected to a proximal boom section

The first and second boom sections 20, 21 are connected by an articulating joint 22 provided in a corner section 23 of the first boom 20 and a corner section 24 of the second boom section 21, the first and second corner sections 23, 24 being provided adjacent to each other. The articulating joint 22 allows for a 180 degrees rotational movement between the first and second boom sections 20, 21 as shown in Fig. 2. By the rotational movement the arrangement with the first and second boom sections 20, 21 can be relocated between an extended boom section arrangement (orientation) shown in the top part of the Fig. 2 and an retracted boom section arrangement (orientation) shown in bottom part of the Fig. 2. Such relocation may also be referred to as movement between a linear boom section orientation (top) and a parallel boom section orientation (bottom). The relocation may be applied, for example, for establishing a working configuration and a transport configuration for the boom 1.

The arrangement comprising the first and second boom sections 20, 21 is assigned an actuator 25 providing a driving force for the 180 degrees rotational movement or pivoting between the first and second boom sections 20, 21. In the embodiments shown the actuator 25 is provided with a cylinder-piston arrangement 26 having, for example, a hydraulic cylinder. Alternatively, an electric or a magnetic actuator may be provided. Embodiments may include a using a pneumatic cylinder as an actuator, or a differential cylinder, a synchronous cylinder, a tandem cylinder, a telescopic cylinder or a combination thereof.

According to the Fig. 2, a moving actuator element 27 can be moved between a retracted position (top) and an extended position (bottom). Movement of the movable actuator element 27 is applied to relocate the arrangement comprising the first and second boom section 20, 21.

The movable actuator element 27 is functionally connected to an arrangement of hinged elements 28 connecting to both the first and the second boom sections 20, 21. There is a folding arm 29 connecting to the movable actuator element 27 on one side and to the second boom section 21 on the other side. Folding or link arm elements 29a, 29b are connected by an articulating joint 30. The link arm elements 29a, 29b are provided in a serial arrangement.

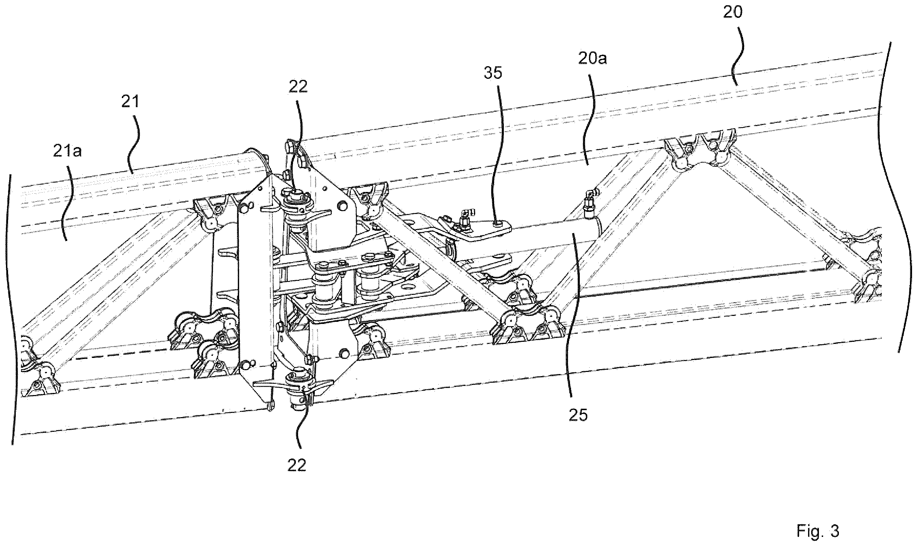

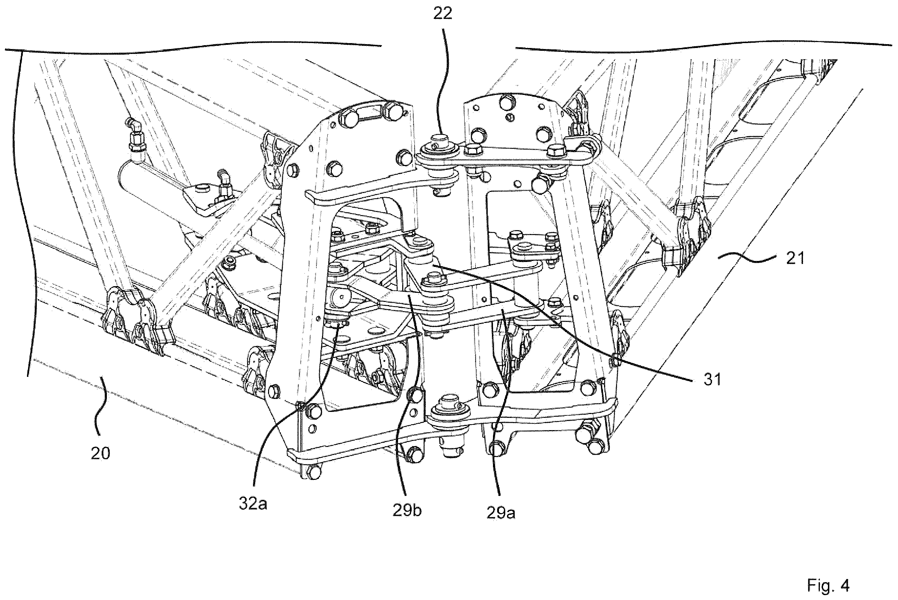

For the arrangements shown in Fig. 3 and 4, there is a distal hinged element 31 provided with or by a lever element and located distal to the actuator 25. The distal hinged element 31 is connected to the articulating joint 30 of the folding arm 29.

The distal hinged element 31 may be connected to at least one of the link arm elements 29a, 29b, thereby, establishing in indirect (non-direct) connection of the distal hinged element 31 to the articulating joint 30 (through the link arm element).

Referring to Fig. 2, there is further a proximal hinged element 33 which is located proximal to the single actuator 25. The proximal hinged element 33 is connecting to the movable actuator element 27 on one side and, in a first mounting (supporting or attachment) point 32a, to the first boom section 20 on the other side, both connections providing for rotatable connection. The proximal hinged element 33 is rotatable or pivotally received on both end sides. The connection between the proximal hinged element 33 and the movable actuator element 27 may be a direct connection or an indirect connection in case the proximal hinged element 33 is connecting to the link arm elements 29b, for example, in a location adjacent to the movable actuator element 27.

The distal hinged element 31 is further connected to a second mounting (supporting or attachment) point 32b on the first boom section 20. The distal hinged or lever element 31 is rotatable or pivotally received on both end sides.

The folding arm 29 is connected to a third mounting (supporting or attachment) point 32c on the second boom section 21.

At least the first boom section 20 is having a frame structure provided by frame elements being connected fixedly or detachably. The actuator 25 is provided inside the frame structure of the first boom section 20, for example in a mounting space 34 provided inside or within the frame structure of the first boom section 20.

Also, the second boom section 21 may be provided with a second frame structure comprising frame elements connected fixedly or detachably.

The attachment or mounting point 32 may be provided on the respective frame structure.

Referring to Fig. 2, the actuator 25 is mounted to a rotational or mounting point 35 allowing rotational movement (pivoting) of the actuator 25 around the rotational point 35 while the movable actuator element 27 is moved between the extended and the retracted positions. For the example shown in Fig. 2, in the top view depicted (looking from the side opposite to the location of the rotational point 35), the rotational point 35 is located underneath the actuator 25 in a top view of the actuator 25.

Fig. 3 to 6 show an embodiment for an arrangement schematically shown in Fig. 2. In Fig. 3 to 6 for the same features identical reference numerals are applied like in Fig. 2.

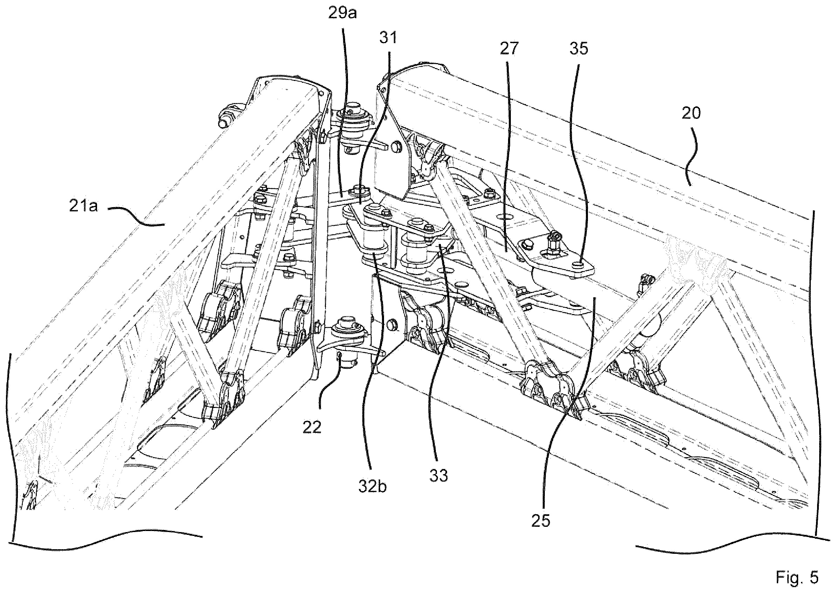

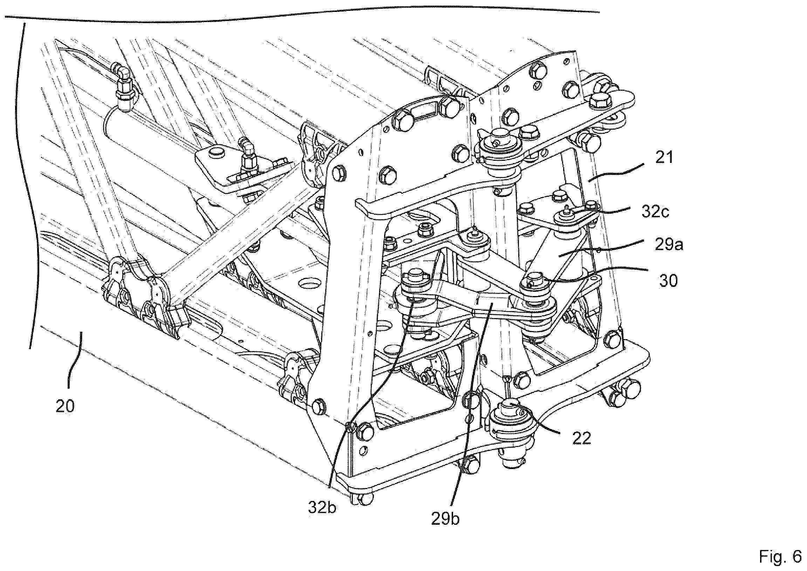

Fig. 3 shows the arrangement having the first and second boom sections 20, 21 in the (fully) extended position. In Fig. 4 and 5, the first and second boom sections 20, 21 are in an intermediate position (partially extended, partially retracted). Finally, Fig. 6 shows a (fully) retracted position for the first and second boom sections 20, 21.

The actuator 25 is located inside a first frame structure 20a of the first boom section 20. The actuator is completely received inside a space spanned the first frame structure 20a. The second boom section 21 is provided with a second frame structure 21a receiving inside the third mounting (supporting or attachment) point 32c.

With respect to the rotational point 35, the actuator 25 is pivotally mounted or supported on opposite sides above and underneath the actuator 35.

The features disclosed in this specification, the figures and / or the claims may be material for the realization of various embodiments within the scope of the claims.

## Claims

1. An assembly for an extendable and retractable boom of an agricultural machine, comprising
- a first boom section (20) having a first frame structure (20a) comprising a plurality of frame elements;
- a second boom section (21) connected to the first boom (20) section by an articulating joint (22) configured to allow 180 degrees rotational movement between the first and second boom sections (20, 21), thereby, relocating the first and second boom sections (20, 21) between an extended boom section arrangement and a retracted boom section arrangement;
- an arrangement of hinged elements (28) connected to both the first and the second boom sections (20, 21); and
- an actuator mechanism, the actuator mechanism comprising an actuator (25) received inside the first frame structure (20a) of the first boom section (20) and functionally connected to the arrangement of hinged elements (28), wherein the actuator mechanism and the arrangement of hinged elements (28) are configured to produce the 180 degrees rotational movement between the first and second boom sections (20, 21), and the actuator (25) is configured to drive the 180 degrees rotational movement;
the assembly for an extendable and retractable boom being **characterized in that** the arrangement of hinged elements (28) comprises
- a plurality of link arms (29a, 29b) provided in a link arm arrangement, wherein a distal end of the link arm arrangement being distal to the actuator (25) is connected to the second boom section (21) and a proximal end of the link arm arrangement being proximal to the actuator (25) is connected to the actuator (25);
- a first lever element (33), wherein the first lever element (33) is pivotally connected on opposite sides to the actuator (25) and a first mounting point (32a), respectively, the first mounting point (32a) being located inside the first frame structure (20a) of the first boom section (20); and
- a second lever element (31), wherein the second lever element (31) is pivotally connected on opposite sides to an articulating joint (30) of the link arm arrangement and a second mounting point (32b), respectively, the second mounting point (32b) located inside the first frame structure (20a) of the first boom section (20).

2. The assembly according to claim 1, wherein the actuator mechanism is made of a single actuator (25).

3. The assembly according to claim 1 or 2, wherein the link arm arrangement is a serial link arm arrangement.

4. The assembly according to at least one of the preceding claims, wherein the actuator (25) is movable between an extracted and a retracted position for driving the 180 degrees rotational movement between the first and second boom sections (20, 21).

5. The assembly according to at least one of the preceding claims, wherein the actuator (25) is provided with a cylinder-piston arrangement.

6. The assembly according to at least one of the preceding claims, wherein the actuator (25) is located within a mounting space provided inside the first frame structure of the first boom section (20).

7. The assembly according to at least one of the preceding claims, wherein at least one of the proximal end of the link arm arrangement and first lever element (33) connect pivotally to a movable actuator element (27) of the actuator (25), the movable actuator element (27) moving between a first and a second position in operation for producing the 180 degrees rotational movement between the first and second boom sections (20, 21).

8. The assembly according to at least one of the preceding claims, wherein the actuator (25) is connected to the first boom section (20) in a rotation point (35) allowing the actuator (25) to rotate around the rotation point (35) while the actuator (25) is driving the 180 degrees rotational movement between the first and second boom sections (20, 21).

9. The assembly according to claim 8, wherein the rotation point (35) is located in a location selected from the following group: underneath the actuator (25), within outer edges of the actuator (25), and adjacent to the outer edges of the actuator (25).

10. The assembly according to at least one of the preceding claims, wherein each of the first and second boom sections (20, 21) is a sprayer boom section for an agricultural sprayer.

11. An agricultural sprayer, comprising an extendable and retractable boom having an assembly according to at least one of the preceding claims.

## Patentansprüche

1. Baugruppe für einen ausklappbaren und einklappbaren Ausleger einer landwirtschaftlichen Maschine, aufweisend
- einen ersten Auslegerabschnitt (20) aufweisend eine erste Rahmenstruktur (20a), welche eine Mehrzahl von Rahmenelementen aufweist;
- einen zweiten Auslegerabschnitt (21) verbunden mit dem ersten Auslegerabschnitt (20) durch eine Gelenkverbindung (22), welche dafür eingerichtet ist, eine Drehbewegung um 180 Grad zwischen dem ersten und dem zweiten Auslegerabschnitt (20, 21) zu ermöglichen, wodurch der erste und der zweite Auslegerabschnitt (20, 21) zwischen einer ausgeklappten Auslegerabschnittanordnung und einer eingeklappten Auslegerabschnittanordnung verlagert werden;
- eine Anordnung schwenkbarer Elemente (28), welche sowohl mit dem ersten als auch mit dem zweiten Auslegerabschnitt (20, 21) verbunden ist; und
- einen Aktuatormechanismus, wobei der Aktuatormechanismus einen Aktuator (25), welcher innerhalb der ersten Rahmenstruktur (20a) des ersten Auslegerabschnitts (20) aufgenommen ist, aufweist, und mit der Anordnung schwenkbarer Elemente (28) wirkverbunden ist, wobei der Aktuatormechanismus und die Anordnung schwenkbarer Elemente (28) dafür eingerichtet sind, die Drehbewegung um 180 Grad zwischen dem ersten und dem zweiten Auslegerabschnitt (20, 21) zu erzeugen, und der Aktuator (25) dafür eingerichtet ist, die Drehbewegung um 180 Grad anzutreiben;
wobei die Baugruppe für einen ausklappbaren und einklappbaren Ausleger **dadurch gekennzeichnet ist, dass** die Anordnung schwenkbarer Elemente (28) Folgendes aufweist:
- eine Mehrzahl von Verbindungsarmen (29a, 29b), welche in einer Verbindungsarmanordnung bereitgestellt sind, wobei ein distales Ende der Verbindungsarmanordnung, welches distal zum Aktuator (25) angeordnet ist, mit dem zweiten Auslegerabschnitt (21) verbunden ist, und ein proximales Ende der Verbindungsarmanordnung, welches proximal zum Aktuator (25) angeordnet ist, mit dem Aktuator (25) verbunden ist;
- ein erstes Hebelelement (33), wobei das erste Hebelelement (33) an entgegengesetzten Seiten schwenkbar mit dem Aktuator (25) beziehungsweise einem ersten Befestigungspunkt (32a) verbunden ist, wobei der erste Befestigungspunkt (32a) innerhalb der ersten Rahmenstruktur (20a) des ersten Auslegerabschnitts (20) angeordnet ist; und
- ein zweites Hebelelement (31), wobei das zweite Hebelelement (31) an entgegengesetzten Seiten schwenkbar mit einer Gelenkverbindung (30) der Verbindungsarmanordnung beziehungsweise einem zweiten Befestigungspunkt (32b) verbunden ist, wobei der zweite Befestigungspunkt (32b) innerhalb der ersten Rahmenstruktur (20a) des ersten Auslegerabschnitts (20) angeordnet ist.

2. Baugruppe nach Anspruch 1, wobei der Aktuatormechanismus aus einem einzigen Aktuator (25) gebildet ist.

3. Baugruppe nach Anspruch 1 oder 2, wobei die Verbindungsarmanordnung eine serielle Verbindungsarmanordnung ist.

4. Baugruppe nach mindestens einem der vorstehenden Ansprüche, wobei der Aktuator (25) zwischen einer ausgefahrenen und einer eingezogenen Position beweglich ist, um die Drehbewegung um 180 Grad zwischen dem ersten und dem zweiten Auslegerabschnitt (20, 21) anzutreiben.

5. Baugruppe nach mindestens einem der vorstehenden Ansprüche, wobei der Aktuator (25) mit einer Zylinder-Kolben-Anordnung versehen ist.

6. Baugruppe nach mindestens einem der vorstehenden Ansprüche, wobei der Aktuator (25) in einem Einbauraum, welcher innerhalb der ersten Rahmenstruktur des ersten Auslegerabschnitts (20) bereitgestellt ist, angeordnet ist.

7. Baugruppe nach mindestens einem der vorstehenden Ansprüche, wobei mindestens eines der Elemente aus der Gruppe umfassend das proximale Ende der Verbindungsarmanordnung und das erste Hebelelement (33) schwenkbar mit einem beweglichen Aktuatorelement (27) des Aktuators (25) verbunden ist, wobei sich das bewegliche Aktuatorelement (27) im Betrieb zwischen einer ersten und einer zweiten Position bewegt, um die Drehbewegung um 180 Grad zwischen dem ersten und dem zweiten Auslegerabschnitt (20, 21) zu erzeugen.

8. Baugruppe nach mindestens einem der vorstehenden Ansprüche, wobei der Aktuator (25) an einem Drehpunkt (35) mit dem ersten Auslegerabschnitt (20) verbunden ist, wodurch sich der Aktuator (25) rund um den Drehpunkt (35) drehen kann, während der Aktuator (25) die Drehbewegung um 180 Grad zwischen dem ersten und dem zweiten Auslegerabschnitt (20, 21) antreibt.

9. Baugruppe nach Anspruch 8, wobei der Drehpunkt (35) an einer Position ausgewählt aus der folgenden Gruppe angeordnet ist: unter dem Aktuator (25), innerhalb von Außenkanten des Aktuators (25), und angrenzend an die Außenkanten des Aktuators (25).

10. Baugruppe nach mindestens einem der vorstehenden Ansprüche, wobei sowohl der erste als auch der zweite Auslegerabschnitt (20, 21) ein Sprühauslegerabschnitt für eine landwirtschaftliche Feldspritze ist.

11. Landwirtschaftliche Feldspritze, aufweisend einen ausklappbaren und einklappbaren Ausleger, welcher eine Baugruppe nach mindestens einem der vorstehenden Ansprüche aufweist.

## Revendications

1. Ensemble pour flèche extensible et rétractable d'une machine agricole, comprenant
- une première section de flèche (20) dotée d'une première structure de cadre (20a) comprenant une pluralité d'éléments de cadre ;
- une seconde section de flèche (21) connectée à la première section de flèche (20) par un joint articulé (22) configuré pour permettre un mouvement de rotation de 180 degrés entre les première et seconde sections de flèche (20, 21), en relocalisant ainsi les première et seconde sections de flèche (20, 21) entre un dispositif de section de flèche étendu et un dispositif de section de flèche rétracté ;
- un dispositif d'éléments de charnière (28) connecté à la fois aux première et seconde sections de flèche (20, 21) ; et
- un mécanisme actionneur, le mécanisme actionneur comprenant un actionneur (25) reçu à l'intérieur de la première structure de cadre (20a) de la première section de flèche (20) et connecté fonctionnellement au dispositif d'éléments à charnière (28), le mécanisme actionneur et le dispositif d'éléments à charnière (28) étant configurés pour produire le mouvement de rotation de 180 degrés entre les première et seconde sections de flèche (20, 21), et l'actionneur (25) étant configuré pour entraîner le mouvement de rotation de 180 degrés ;
l'ensemble pour flèche extensible et rétractable étant **caractérisé en ce que** le dispositif d'éléments à charnière (28) comprend
- une pluralité de bras de liaison (29a, 29b) prévus dans un dispositif de bras de liaison, une extrémité distale du dispositif de bras de liaison qui est distale par rapport à l'actionneur (25) étant connectée à la seconde section de flèche (21) et une extrémité proximale du dispositif de bras de liaison qui est proximale par rapport à l'actionneur (25) étant connectée à l'actionneur (25) ;
- un premier élément levier (33), le premier élément levier (33) étant connecté de manière à pouvoir pivoter sur des faces opposées à l'actionneur (25) et à un premier point de montage (32a) respectivement, le premier point de montage (32a) étant localisé à l'intérieur de la première structure de cadre (20a) de la première section de flèche (20) ; et
- un second élément levier (31), le second élément levier (31) étant connecté de manière à pouvoir pivoter sur des faces opposées à un joint d'articulation (30) du dispositif de bras de liaison et à un second point de montage (32b) respectivement, le second point de montage (32b) étant localisé à l'intérieur de la première structure de cadre (20a) de la première section de flèche (20).

2. Ensemble selon la revendication 1, dans lequel le mécanisme actionneur est composé d'un seul actionneur (25).

3. Ensemble selon la revendication 1 ou 2, dans lequel le dispositif de bras de liaison est un dispositif de bras de liaison en série.

4. Ensemble selon au moins une des revendications précédentes, dans lequel l'actionneur (25) est mobile entre une position extraite et une position rétractée pour entraîner le mouvement de rotation de 180 degrés entre les première et seconde sections de flèche (20, 21).

5. Ensemble selon au moins une des revendications précédentes, dans lequel l'actionneur (25) est pourvu d'un dispositif de cylindre et piston.

6. Ensemble selon au moins une des revendications précédentes, dans lequel l'actionneur (25) se trouve dans un espace de montage prévu à l'intérieur de la première structure de cadre de la première section de flèche (20).

7. Ensemble selon au moins une des revendications précédentes, dans lequel au moins un élément parmi l'extrémité proximale du dispositif de liaison et le premier élément levier (33) se connecte de manière à pouvoir pivoter à un élément actionneur mobile (27) de l'actionneur (25), l'élément actionneur mobile (27) se déplaçant entre une première une seconde position en fonctionnement pour produire le mouvement de rotation de 180 degrés entre les première et seconde sections de flèche (20, 21).

8. Ensemble selon au moins une des revendications précédentes, dans lequel l'actionneur (25) est connecté à la première section de flèche (20) à un point de rotation (35) en permettant à l'actionneur (25) de tourner autour du point de rotation (35) pendant que l'actionneur (25) entraîne le mouvement de rotation de 180 degrés entre les première et seconde sections de flèche (20, 21).

9. Ensemble selon la revendication 8, dans lequel le point de rotation (35) se trouve à un emplacement sélectionné dans le groupe suivant : en dessous de l'actionneur (25), avec les bords extérieurs de l'actionneur (25), et adjacent aux bords extérieurs de l'actionneur (25).

10. Ensemble selon au moins une des revendications précédentes, dans lequel chacune des première et seconde sections de flèche (20, 21) est une section de flèche de pulvérisation pour un pulvérisateur agricole.

11. Pulvérisateur agricole, comprenant une flèche extensible et rétractable dotée d'un ensemble selon au moins une des revendications précédentes.
